# EUROPEAN PATENT SPECIFICATION

(11) **EP 4 029 740 B1**
(45) Date of publication and mention of the grant of the patent: **08.10.2025**
(21) Application number: 21216438.8
(22) Date of filing: 21.12.2021
(51) Int. Cl.: B60T 1/00, B60T 1/06, B60T 13/74

(54) **BRAKE SYSTEM FOR A MOTOR VEHICLE AND METHOD FOR OPERATING THE BRAKE SYSTEM**
BREMSANLAGE FÜR EIN KRAFTFAHRZEUG UND VERFAHREN ZUM BETREIBEN DER BREMSANLAGE
SYSTÈME DE FREINAGE POUR UN VÉHICULE AUTOMOBILE ET PROCÉDÉ DE FONCTIONNEMENT DU SYSTÈME DE FREINAGE

(30) Priority: 23.12.2020 CN 202011535784
(43) Date of publication of application: 20.07.2022
(73) Proprietor: Volvo Car Corporation, 40531 Göteborg (SE)
(72) Inventor: JIN, Yongxing, Shanghai, 201815 (CN)
(74) Representative: Maiwald GmbH

(56) References cited:
- KR-B1- 101 220 405
- US-A1- 2019 375 283
- US-A1- 2020 324 635
- US-A1- 2020 361 437

## Description

### Technical Field

The present invention generally relates to a brake system for a motor vehicle and a method for operating the brake system.

### Background

Brake devices are mandatory equipment for motor vehicles. US 2019/375283 A1 and US 2020/324635 A2 disclose some examples. Usually, the brake devices can be categorized into two types, one including brake devices mainly configured to provide braking for the motor vehicle that are running, and the other including electric motor brakes mainly configured to provide braking for the motor vehicles that are parked. The latter are often called electric parking brakes (EPB), which are widely used in the current motor vehicles. The former brake devices function mainly through their hydraulic brake subsystems, and the latter brakes function mainly through their parking motor brake subsystems. In either case, a brake disc and a brake friction plate are required to be installed in a wheel rim of a motor vehicle such that the brake friction plate can be driven respectively by the hydraulic brake subsystem or the parking motor brake subsystem to contact the brake disc, and thus a friction force can be generated between the brake friction plate and the brake disc so as to achieve the respective braking.

Due to a limited installation space defined by the wheel rim, it is impossible to install a high-power electric motor for the electric parking brake. Therefore, a current electric parking brake is normally configured to provide braking for a motor vehicle only when it is parked, but not when it is running. However, as the response speed of hydraulic braking is much slower than the response speed of motor braking, the motor braking, if being used to provide braking for the motor vehicle when it is running, will result in a greatly improved braking effect.

Furthermore, in the configuration of an existing vehicle frame, most parts of the brake subsystem such as the brake disc, a brake cylinder or the like, and an electric motor of the parking motor brake subsystem or the like are arranged in the wheel rim, resulting in excessive unsprung mass of the motor vehicle's suspension system such that it will be difficult to further improve the motor vehicle's passenger comfort and handling stability.

Moreover, since the brake disc and the brake friction plate are arranged in the wheel rim, a lot of brake dusts are generated during the braking of the running motor vehicle will be thrown away from the brake friction plate and be absorbed onto the wheel rim's surface, seriously affecting the appearance of the motor vehicle.

### Summary

Therefore, one objective of the present invention is to propose a novel brake system for a motor vehicle such that those issues existing in the prior art as mentioned above could be solved.

According to one aspect of the present invention, a brake system for a motor vehicle is proposed, which brake system includes: a braking assembly; a drive mechanism operatively connected to the braking assembly; and an electric motor assembly operatively connected to the drive mechanism, wherein the braking assembly, the drive mechanism and the electric motor assembly are configured to be located outside a wheel rim of a vehicle wheel of the motor vehicle and inside a frame body of the motor vehicle, and the drive mechanism is configured to be driven by the electric motor assembly to selectively enable the braking assembly to generate a braking force, by which an associated rotatable shaft of the motor vehicle can be stopped to rotate, while the motor vehicle is in motion during the running process of the motor vehicle. According to the present invention, as the braking assembly, the drive mechanism and the electric motor assembly are all located outside the wheel rim, their sizes will not be limited by an internal installation space of the wheel rim as in the prior art. That is to say, the electric motor assembly will probably have a higher power electric motor, and the braking assembly will probably have a larger sized brake disc and a larger sized brake friction plate such that pure motor braking can be sufficiently performed during the motor vehicle running process. As the pure motor braking will result in a faster response time than hydraulic braking as in the prior art, the brake system according to the present invention will greatly improve the motor vehicle's braking effect performance. Therefore, it is ensured that the motor vehicle is able to be running more safely and comfortably, the motor vehicle body's stability control performance can be obtained more precisely and braking energy recovery can be carried out with greatly higher efficiency. Furthermore, as no brake disc and no brake friction plate will be arranged in the wheel rim, brake dusts even if occurring during the motor vehicle's running process, will not be adhered to the wheel rim's outer surface to affect its appearance.

In an embodiment, the braking assembly is configured to include a brake disc fixedly installed to the rotatable shaft and a brake friction plate installed non-rotatably relative to the rotatable shaft.

In an embodiment, the drive mechanism is configured to act on the brake friction plate.

In an embodiment, the electric motor assembly comprises an electric motor and a speed reducer connected to an output shaft of the electric motor, and the speed reducer is also configured to be connected to the drive mechanism.

In an embodiment, the drive mechanism is configured to be driven by the electric motor assembly such that a friction braking force for stopping the rotation of the rotatable shaft can be selectively generated by the brake friction plate.

In an embodiment, the drive mechanism comprises a cylinder body and a piston assembly installed in the cylinder body, the piston assembly is axially movable in the cylinder body and configured to include a first part configured to contact the brake friction plate and a second part opposite to the first part, and the speed reducer is configured to be operatively connected to the second part.

In an embodiment, a fluid space is formed between the second part of the piston assembly and an inner wall of the cylinder body to receive brake fluid. According to the invention, the brake system further comprises a hydraulic brake assembly located outside the wheel rim of the vehicle wheel of the motor vehicle and inside the frame body of the motor vehicle, the hydraulic brake assembly is in communication with the fluid space in such a way that the brake fluid being selectively supplied into the fluid space, and the hydraulic brake assembly is configured to, independently of the electric motor assembly, drive the drive mechanism so as to enable the brake friction plate to contact the brake disc to generate the friction braking force, by which the rotatable shaft of the motor vehicle can be stopped to rotate while the vehicle is in motion during the running process of the motor vehicle. As all constituent parts of the brake system according to the present invention can be arranged in the frame body regardless of the wheel rim, the constituent parts of the brake system will be prevented from being soiled due to a long-term exposure to the outside environment.

In an embodiment, the brake system further comprises a brake pedal connected to the electric motor assembly and operatively connected to a brake master cylinder of the hydraulic brake assembly.

In an embodiment, the brake system further comprises a normally open solenoid valve provided in a hydraulic circuit configured to connect the hydraulic brake assembly with the fluid space, and the normally open solenoid valve is configured to have an OFF mode, in which the hydraulic circuit is disabled when the electric motor assembly functions normally, and an ON mode, in which the hydraulic circuit is enabled only when the electric motor assembly functions abnormally. Here, the normally open solenoid valve is designed in such a way that hydraulic braking can provide failure protection for pure motor braking. In this way, in case of the motor braking being failure, the hydraulic braking can be embodied as back-up braking for the motor vehicle such that the brake system's reliability can be improved to meet braking regulatory requirements.

In an embodiment, the second part of the piston assembly is formed with a cylinder-shaped inner wall on which a plunger piston is axially slidably received in such a way that sliding of the piston assembly in the cylinder body is independent of sliding of the plunger piston, the plunger piston comprises a central threaded hole in threaded engagement with a threaded shaft rotatably installed through the cylinder body, and an end of the threaded shaft outside the cylinder body is connected to the speed reducer in such a way that the threaded shaft is configured to be driven by the speed reducer to rotate.

In an embodiment, the piston assembly is provided with an abutting feature capable of contacting the plunger piston, and the abutting feature is configured to be driven by the plunger piston such that the piston assembly can be axially moved in the cylinder body.

In an embodiment, the rotatable shaft is a driving shaft for driving the vehicle wheel to rotate; or alternatively the rotatable shaft is a driven shaft rotating with the vehicle wheel.

In an embodiment, each vehicle wheel of the motor vehicle is equipped with the brake system; or alternatively only forward vehicle wheels or rear vehicle wheels of the motor vehicle are equipped with the brake system.

According to another aspect of the present invention, a motor vehicle is proposed, which motor vehicle comprises a braking assembly; a drive mechanism operatively connected to the braking assembly; and an electric motor assembly operatively connected to the drive mechanism, wherein the braking assembly, the drive mechanism and the electric motor assembly are configured to be located outside a wheel rim of a vehicle wheel of the motor vehicle and inside a frame body of the motor vehicle, and the drive mechanism is configured to be driven by the electric motor assembly to selectively enable the braking assembly to generate a braking force, by which an associated rotatable shaft of the motor vehicle can be stopped to rotate , while the motor vehicle is in motion during the running process of the motor vehicle. The electric motor assembly comprises an electric motor and a speed reducer connected to an output shaft of the electric motor, and the speed reducer is also configured to be connected to the drive mechanism. The drive mechanism comprises a cylinder body and a piston assembly installed in the cylinder body. The piston assembly is axially movable in the cylinder body and configured to include a first part configured to contact the brake friction plate and a second part opposite to the first part. The speed reducer is configured to be operatively connected to the second part. A fluid space is formed between the second part of the piston assembly and an inner wall of the cylinder body to receive a brake fluid. The motor vehicle further comprises a hydraulic brake assembly located outside the wheel rim of the vehicle wheel of the motor vehicle and inside the frame body of the motor vehicle. The hydraulic brake assembly is in communication with the fluid space in such a way that the brake fluid is selectively supplied into the fluid space. The hydraulic brake assembly is configured to, independently of the electric motor assembly, drive the drive mechanism so as to enable the brake friction plate to contact the a brake disc to generate a friction braking force, by which the rotatable shaft of the motor vehicle can be stopped to rotate while the vehicle is in motion during a running process of the motor vehicle.

In an embodiment, the motor vehicle is an electric vehicle.

According to another aspect of the present invention, a method for operating a motor vehicle in motion during a running process of the motor vehicle including a brake pedal, a brake system, a rotatable shaft connecting to a wheel of the motor vehicle is proposed, the method comprising: pressing the brake pedal of the motor vehicle to activate the brake system, said braking system comprising a braking assembly; a drive mechanism operatively connected to the braking assembly; and an electric motor assembly operatively connected to the drive mechanism, wherein the braking assembly, the drive mechanism and the electric motor assembly are configured to be located outside a wheel rim of a vehicle wheel of the motor vehicle and inside a frame body of the motor vehicle; driving the braking assembly only by the electric motor assembly to generate a braking force if the electric motor assembly functions normally, or by a hydraulic brake assembly, if the electric motor assembly functions abnormally; and having the braking force act on the rotatable shaft to stop the rotatable shaft from rotating.

In an embodiment, if the electric motor assembly functions abnormally, driving the braking assembly of the brake system by pressing the brake pedal to actuate a hydraulic brake assembly of the brake system to generate the braking force to stop the rotatable shaft from rotating.

According to the technical solutions of the present invention, as the brake system will not be arranged in the wheel rim, an electric motor of higher power and of a greater size could be adopted so as to perform braking for the motor vehicle that is running. Therefore, as the brake system will not be exposure to the outside environment, further reduction of noise caused by the vehicle's running braking will be allowed and brake dusts will be prevented from polluting the motor vehicle's appearance, especially the brake system will be prevented from being soiled and damaged and thus will have an increased service life.

### Brief Description of the Drawings

The principles and other aspects of the present invention will be explained in the following description with reference to the drawings.
Fig. 1 is a schematic diagram illustrating a brake system for a motor vehicle according to one embodiment of the present invention, wherein the brake system for a single vehicle wheel is shown;
Fig. 2 is a schematic diagram illustrating a drive mechanism according to one example of the present invention to drive a brake friction plate to work;
Fig. 3 is a schematic diagram illustrating how the brake system according to the embodiment of the present invention is applied to a motor vehicle; and
Fig. 4 is a flow chart illustrating a method for operating the brake system according to one example of the present invention.

### Detailed Description of Embodiments

In the drawings of the present invention, the features having the same configuration or same functions may be represented by the same reference numerals respectively.

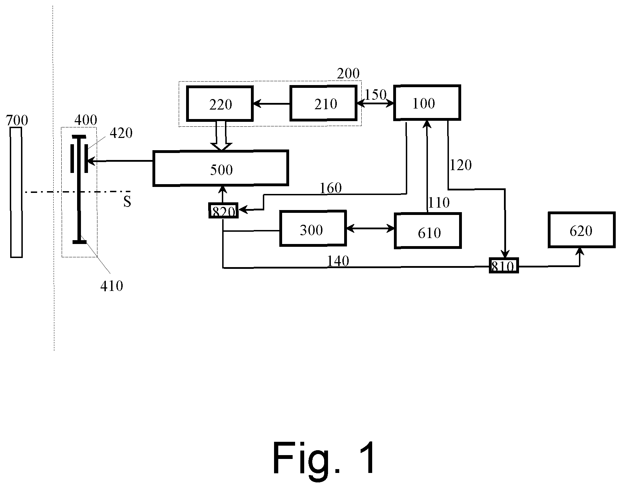

Fig. 1 is a schematic diagram illustrating a brake system for a motor vehicle according to one embodiment of the present invention. For illustration, the brake system for only a single vehicle wheel is shown.

It should be understood by one person having ordinary skill in the art that the motor vehicle mentioned in the context of the present inventionincludes but is not limited to a combustion engine vehicle, an electric vehicle, a hybrid electric vehicle or the like. As shown in Fig. 1, the brake system for the motor vehicle is configured to include an electronic control unit (ECU) 100, an electric motor assembly 200, a hydraulic brake assembly 300, a braking assembly 400 for acting on the vehicle wheel to generate a friction braking force thereon, a drive mechanism 500 for driving the braking assembly 400 to work, and a brake pedal 610. The hydraulic brake assembly 300 is configured to include a brake master cylinder and a brake fluid storage tank. The brake pedal 610 is operatively connected to the brake master cylinder of the hydraulic brake assembly 300 in such a way that pressing the brake pedal 610 will enable the brake master cylinder to operate and thus brake fluid is pressurized and discharged out of the brake fluid storage tank.

The electronic control unit 100 for example can be an on-board computer or alternatively an independent control computer. The electronic control unit 100 is configured to be electrically connected to the electric motor assembly 200 and the brake pedal 610 such that an input from the brake pedal 610 can be used to control an operation of the electric motor assembly 200. Take the brake pedal 610 and the electronic control unit 100 for example, the term "be electrically connected" means that the electronic control unit 100 is able to receive electrical signals from the brake pedal 610 such that the electronic control unit 100 is able to determine a driver's braking action on the basis of a preset program and carry out electric motor braking. In the meanwhile, the brake pedal 610 is also operatively connected to the brake master cylinder of the hydraulic brake assembly 300 such than in case of failure of electric motor braking, the brake pedal 610 is able to directly and independently control an operation of the hydraulic brake assembly 300.

The braking assembly 400 is configured to include a brake disc 410 and a brake friction plate 420. For instance, the brake disc 410 is disposed onto a rotatable shaft to be braked (a central axis of the rotatable shaft for example being marked as "S" in Fig. 1), and the brake friction plate 420 for example includes a pair of brake friction plates which are arranged on both sides of the brake disc 410 at an interval respectively. Furthermore, the brake friction plates are arranged non-rotationally relative to the rotatable shaft. The braking assembly 400 is configured to be driven by the drive mechanism 500. For example, the drive mechanism 500 can be configured to act directly on the brake friction plate(s) 420 of the braking assembly 400. When desired, the pair of the brake friction plates 420 can be configured to clamp the brake disc 400 when rotating, and a friction force then produced therebetween will stop the rotation of the brake disc 410 and also the rotating shaft. According to an embodiment of the present invention, the rotatable shaft as mentioned above can be a driven shaft configured to rotate along with the rotating vehicle wheel or a driving shaft configured to drive the vehicle wheel to rotate. However, the brake disc 410 is installed not in a wheel rim 700 of the motor vehicle but in a frame body of the motor vehicle. In Fig. 1, a vertical dotted line represents a boundary, viewed from top down, between the interior of the frame body and the exterior of the frame body, wherein the left side to the dotted line represents a region outside the frame body of the motor vehicle (for example a region where the wheel rim locates), and the right side to the dotted line represents a region inside the frame body of the motor vehicle.

According to an embodiment of the present invention, unlike what was done in the prior art, because the braking assembly 400 is not provided in the wheel rim 700, brake dusts generated during braking will not adhere to the wheel rim 700 to negatively affect its appearance. Furthermore, as the braking assembly 400 is provided inside the frame body of the motor vehicle, the electric motor assembly 200, the hydraulic brake assembly 300 and the drive mechanism 500 will be enclosed for protection. In contrast with the prior art, this will also prevent dirt such as mud during a long-term use of the motor vehicle from contacting and/or corroding those assemblies and/or their constituent parts to achieve higher reliability.

The brake pedal 610 is provided with a sensor (not shown) by which an electrical signal can be generated based on the extent to which the brake pedal 610 is pressed. The electrical signal can be transmitted via an electrical cable 110 to the electronic control unit 100 such that the electronic control unit is able to complete a corresponding control operation. Furthermore, the brake pedal 610 is operatively connected to the brake master cylinder of the hydraulic brake assembly 300. Besides the electrical signal transmitted to the electronic control unit 100 as mentioned above, a pressure generated when the brake pedal 610 is pressed can be acted on the hydraulic brake assembly 300 or its brake master cylinder via the brake pedal 610. Moreover, the brake pedal 610 is equipped with a brake pedal sensation simulator 620. The hydraulic brake assembly 300 or its brake master cylinder is configured to be connected to the brake pedal sensation simulator 620 via a hydraulic circuit 140. Therefore, the pressure generated when the brake pedal 610 is pressed can be applied first onto the hydraulic brake assembly 300 or its brake master cylinder directly and then onto the brake pedal sensation simulator 620 via the hydraulic circuit 140. In this way, the brake pedal sensation simulator 620 is configured to generate a feedback force, depending on the pressure transmitted via the hydraulic circuit 140, which will be acted in turn on the hydraulic brake assembly 300 via the hydraulic circuit 140. Therefore, the feedback force will be provided for the brake pedal 610 through the brake master cylinder of the hydraulic brake assembly 300, such that the driver's foot feeling matches any desired feedback for braking.

According to an embodiment of the present invention, a normally closed solenoid valve 810 is provided in the hydraulic circuit 140. The normally closed solenoid valve 810 is connected to the electronic control unit 100 via an electrical cable 120. After the brake system is activated, the electronic control unit 100 in its normal state will instruct the normally closed solenoid valve 810 via the electrical cable 120 to be in an ON mode in which the hydraulic circuit 140 between the brake assembly 300 or its brake master cylinder and the brake pedal sensation simulator 620 is on/enabled. In this case, if the brake pedal 610 is pressed, the brake pedal sensation simulator 620 will be operated by the hydraulic circuit 140 and then the hydraulic brake assembly 300 or its brake master cylinder will also be operated by the hydraulic circuit 140 so as to provide a feedback force action on the brake pedal 610. In this way, it can be ensured that the brake master cylinder of the hydraulic brake assembly 300 is coordinated with the brake pedal sensation simulator 620 and a suitable feedback force can be applied to the brake pedal 610 and then is transmitted to the driver.

Furthermore, according to an embodiment of the present invention, the brake pedal 610 is electrically connected to the electronic control unit 100 via the electrical cable 110 such that the sensor of the brake pedal 610 is configured to provide for the electronic control unit 100 an electrical signal corresponding to the extent to which the brake pedal 610 is pressed. The electric motor assembly 200 is configured to include an electric motor 210 and a speed reducer 220. The electric motor 210 is connected to the electronic control unit 100 via an electrical cable 150 so as to receive an electrical control signal from the electronic control unit 100 and/or provide an electrical feedback signal to the electronic control unit 100. For instance, the speed reducer 220 can be configured as a gear speed reducer or any other suitable form of speed reduction device. Based on the electrical signal received via the electrical cable 110, the electronic control unit 100 is configured to provide a corresponding control signal to the electric motor 210 via the electrical cable 150.

Furthermore, a normally open solenoid valve 820 is provided in a hydraulic circuit connected between the brake master cylinder of the hydraulic brake assembly 300 and the drive mechanism 500. For example, the hydraulic circuit provided with the normally open solenoid valve 820 is configured to be branched from the hydraulic circuit 140 upstream of the normally closed solenoid valve 810. The normally open solenoid valve 820 is connected to the electronic control unit 100 via an electrical cable 160. In the normal state, after the brake system is activated, the electronic control unit 100 will instruct the normally open solenoid valve 820 via the electrical cable 160 to be in an OFF mode. Therefore, the brake system during normal driving of the motor vehicle will achieve braking control through the electric motor assembly 200 controlled by only electrical signals. This will greatly shorten the braking response time. It has been found in experiments that pure electric motor braking as discussed in this invention can lead to a response speed about 10 times faster than conventional pure hydraulic braking. Furthermore, as a safety gatekeeping measure, the brake system can be configured such that even if the electronic control unit 100 fails (i.e. the electric motor 200 will not work), the normally open solenoid valve 820 will be automatically switched from the OFF mode into its ON mode due to the fact that it cannot receive the control signal from the electronic control unit 100; and in the meanwhile the normally closed solenoid valve 810 will be automatically switched from the ON mode into its OFF mode due to the fact that it cannot receive the control signal from the electronic control unit 100. **In** this case, if the brake pedal 610 is pressed by the driver, the hydraulic brake assembly 300 will be operated in such a way that the drive mechanism 500 is enabled to drive the braking assembly 400 to work to ensure failure protection and satisfaction of the government regulatory requirements.

Both of the electric motor assembly 200 and the hydraulic brake assembly 300 are operatively connected to the drive mechanism 500. In the context of the present invention, "one feature is operatively connected to another feature" means that the two features are connected in such a way that an output from the one feature will enable another feature to operate correspondingly.

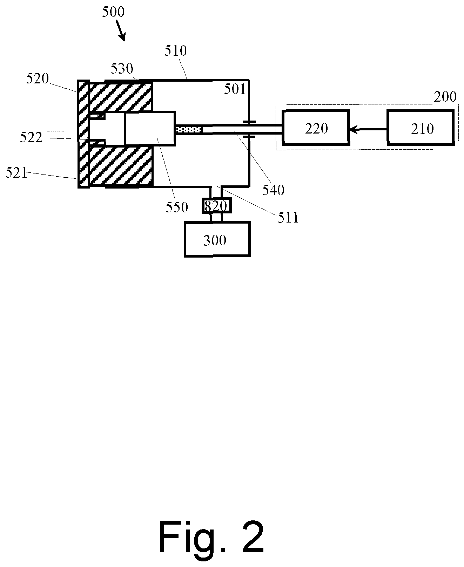

Fig. 2 is a schematic diagram illustrating one example of the drive mechanism 500 which is configured to drive the brake friction plates to work. The drive mechanism 500 is configured to include a cylinder body 510. An axially slidable piston assembly 520 is installed in the cylinder body 510. A fluid space 501 is defined between the piston assembly 520 and an inner wall of the cylinder body 510 to receive brake fluid. A fluid port 511 is formed in the wall of the cylinder body 510 and is configured to be in fluid communication with the brake master cylinder of the hydraulic brake assembly 300 via the hydraulic circuit that is connected in series with the normally open solenoid valve 820. Therefore, the brake fluid can be pressurized and discharged out of the hydraulic brake assembly 300 to enter the fluid space 501 of the cylinder body 510 and drive the piston assembly 520 to move axially. The piston assembly 520 is configured to have a first part 521 configured to protrude outwards from the cylinder body 510. For instance, the first part can be an exposed side of the piston assembly 520. This first part 521 is configured in such a way that it can contact the respective brake friction plate 420, such that an axial movement of the first part 521 will enable the brake friction plate 420 to be in contact with the brake disc 410, so as to generate a friction braking force therebetween. The piston assembly 520 is also configured to have a second part 530 that is axially opposite to the first part 521 and which is configured to be received in the cylinder body 510 in such a way that the second part is axially slidable in the cylinder body. Moreover, a cylinder-shaped inner wall is formed in the second part 520 such that a plunger piston 550 is configured to be axially slidably received on the cylinder-shaped inner wall of the second part 530. In this way, the piston assembly 520 is axially slidable in the cylinder body 510 regardless of the existence of the plunger piston 550. Furthermore, the plunger piston 550 is configured to be installed on a rotatable threaded shaft 540. The threaded shaft 540 is configured to extend into the fluid space 510 through the cylinder body 510. Specifically, the threaded shaft is configured to extend into a space surrounded by the cylinder-shaped wall of the second part 530. For instance, an interface between the threaded shaft 540 and the cylinder body 510 is sealed in a suitable form such that no brake fluid leakage will occur. The threaded shaft 540 is configured to be rotatable. Outside the cylinder body 510, the speed reducer 220 of the electric motor assembly 210 is configured to be operatively connected to the threaded shaft 540, such that the electric motor 210 can to drive the threaded shaft 540 to rotate via the speed reducer 220. A central threaded hole is formed in the plunger piston 550, through which the plunger piston 550 is engageable with the threaded shaft 540. When the threaded shaft 540 is rotated, the plunger piston 550 can be driven to be linearly movable along a central axis of the threaded shaft 540 in a direction associated with the rotational direction of the threaded shaft 540. Furthermore, the piston assembly 520 is also formed with an abutting feature 522 which is configured to contact the plunger piston 550 only after the plunger piston 550 has been driven by the threaded shaft 540 to move axially for certain distance. After said contacting with the piston, if being continuingly driven by the threaded shaft 540, the abutting feature 522 will drive the entire piston assembly 520 to move axially, such that the first part 521 will move axially and the brake friction plate 420 will contact the brake disc 410. In this way, the friction braking force will be generated between the brake friction plate(s) and the brake disc.

That is to say, according to an embodiment of the present invention, the electric motor assembly 200 and the hydraulic brake assembly 300 are configured to control the operation of the drive mechanism 500 independently of each other to drive the braking assembly 400 to generate the friction braking force. The electric motor 200, the drive mechanism 500 and the braking assembly 400 are configured to achieve motor braking, and the hydraulic brake assembly, drive mechanism 500 and the braking assembly 400 are configured to achieve hydraulic braking. In other words, these two ways of braking can be achieved independently of each other.

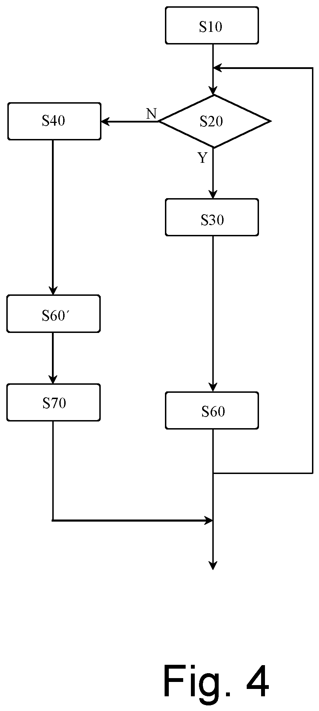

Fig. 4 is a flow chart schematically illustrating a method according to one example of the present invention for controlling the brake system for the motor vehicle. It should be understood by one person having ordinary skill in the art that steps illustrated by the flow chart and explained below can be performed via program codes stored in a memory of the electronic control unit 100 and capable of being invoked and executed by the electronic control unit. The steps are applicable to braking of one wheel or all wheels of the motor vehicle. At step S10, the brake system is activated. For example, the electronic control unit 100 can be configured to receive an electrical signal from the motor vehicle to enable the activation after the motor vehicle is unlocked or a driver enters the motor vehicle. At step S20, after invoking a predefined program, the electronic control unit 100 is configured to perform a test to determine whether the electronic control unit 100 itself and the electric motor assembly 200 can work normally. For instance, it determines whether the operation of the electronic control unit 100 can meet various regulations for safe driving. If it is determined that the electronic control unit 100 itself and the electric motor assembly 200 can work normally, the method goes to step S30. At step S30, as the normally open solenoid valve 820 and the normally closed solenoid valve 810 (also referred to as a normally closed switch) can be instructed by the electronic control unit 100 via the electrical cables 160 and 120 respectively, the normally open solenoid valve 820 is switched into its OFF mode and the normally closed solenoid valve 810 (also referred to as the normally closed switch) is switched into its ON mode. In this case, the hydraulic circuit connecting the brake master cylinder of the hydraulic brake assembly 300 with the drive mechanism 500 will be disabled and thus pressing the brake pedal 610 will not operate the drive mechanism 500 through the hydraulic brake assembly 300. Therefore, the drive mechanism 500 can be operated only through the electric motor assembly 200 to operate the braking assembly 400. Because the motor braking is being achieved here, the driver will be able to perform braking of the motor vehicle at a faster response speed. Then, at step S60, the sensor installed in the brake pedal 610 can be configured to measure an extent to which the brake pedal 610 is pressed. The measured extent will be transmitted as an electrical signal to the electronic control unit 100 to instruct the electric motor assembly 200 correspondingly, for example to instruct the electric motor assembly 200 to independently drive the drive mechanism 500 to operate the braking assembly 400. Thereafter, the method can go to step S20 at which the electronic control unit 100 will continue to perform the test by the predefined program to determine whether the electronic control unit 100 itself and the electric motor assembly 200 can work normally. If the determined result at step S20 is "NO" (i.e. if the electronic control unit 100 itself or the electric motor assembly 200 cannot work properly), the electronic control unit 100 will be disabled to instruct the normally open solenoid valve 820 and the normally closed solenoid valve 810 (also referred to as the normally closed switch) via the electrical cables 160 and 120 respectively. In this case, at a step S40, the normally open solenoid valve 820 will be switched into its ON mode and the normally closed solenoid valve 810 (also referred to as the normally closed switch) will be switched into its OFF mode. Therefore, hydraulic braking will be effective, and motor braking will be ineffective. Then, at step S60', depending on the extent to which the brake pedal 610 is pressed, the hydraulic brake assembly 300 is configured to independently drive the drive mechanism 500 to operate the braking assembly 400, and the method goes to step S70. At step S70, an alarm can be raised to warn the driver that the motor vehicle has to be stopped and the brake system has to be examined.

According to an embodiment of the present invention, during normal driving of the motor vehicle, the brake system can be operated to perform motor braking. Hydraulic braking is built in as back-up braking and/or a motor braking failure protection. This will greatly improve the braking response speed and the motor vehicle body's stability control performance to increase safety. More importantly, for electric vehicles or hybrid electric vehicles, when motor braking is applied, braking can be achieved in shorter time and thus braking energy recovery can be carried out with significantly higher efficiency.

Moreover, as mentioned with respect to Figs. 1 and 2, since the electric motor assembly 200, the hydraulic brake assembly 300, the braking assembly 400 and the drive mechanism 500 of the brake system do not need to be installed in the wheel rim of the motor vehicle, the unsprung mass of the motor vehicle's suspension system will be significantly decreased so as to notably improve the motor vehicle's handling stability and passenger comfort experience. More importantly, as the electric motor assembly 200 can be arranged in an interior space of the frame body of the motor vehicle, the electric motor 210 can have a greater volume and higher power so as to ensure that a sufficient friction braking force can be generated. The brake disc 410 and the brake friction plate(s) 420 of the braking assembly 400 can have bigger sizes and will not be limited by the size of internal space of the wheel rim like the prior art.

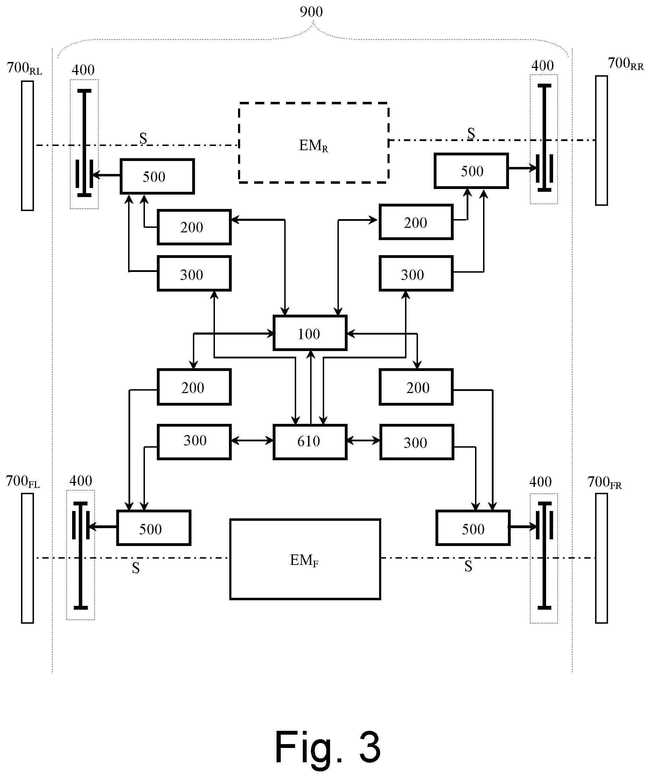

Fig. 3 is a schematic diagram illustrating how the brake system according to one example of the present inventionis applied in complete motor vehicles. It should be noted that the brake system can be applied in both two-wheel-drive (2WD) or four-wheel-drive (4DW) motor vehicles. A pure electric vehicle is illustrated in Fig. 3 but it should be understood by one person having ordinary skill in the art that the brake system according to the present inventioncan be also applied in a hybrid electric vehicle or a combustion engine vehicle. In Fig. 3, a forward-wheel electric motor EMF and a rear-wheel electric motor EMR are shown, in which the rear-wheel electric motor EMR is represented by a dotted frame to mean that the electric vehicle can be operated in either 2WD or 4WD mode. An internal region between two parallel and vertical dotted lines refers to a frame body 900 of the vehicle. As shown, four-wheel rims 700FL, 700FR, 700RL and 700RR are located outside the frame body 900. The suffix "FL" in the associated reference numerals indicates a feature relevant to the vehicle's front left wheel, the suffix "FR" in the associated reference numerals indicates a feature relevant to the vehicle's front right wheel, the suffix "RL" in the associated reference numerals indicates a feature relevant to the vehicle's rear left wheel, and the suffix "RR" in the associated reference numerals indicates a feature relevant to the vehicle's rear right wheel. Each of the wheel rims 700FL, 700FR, 700RL and 700RR is equipped with a rotatable shaft S which is configured to extend into the internal region of the frame body 900. The respective shafts S can be driven by the respective forward-wheel electric motor EMF and rear-wheel electric motor EMR to rotate the respective wheel rims. Alternatively, respective shafts S can be embodied as driven shafts following the rotation of the wheel rims 700RL, 700RR (if the rear-wheel electric motor EMR is omitted). Each rotatable shaft S is provided with a brake system as illustrated by Fig. 1. Moreover, the brake systems of each rotatable shaft S are all controlled by a single electronic control unit 100. Thus, each of the rotatable shafts S is controllable by the electronic control unit 100 as illustrated by Fig. 4, such that braking can be provided for each of the wheel rims respectively and independently. Furthermore, for clarity, some constituent parts such as the brake pedal sensation simulator 620 or the like are not illustrated in Fig. 3. One person having ordinary skill in the art can refer to relevant parts in Fig. 1 and accompanying invention for those constituent parts not illustrated in Fig. 3.

According to an embodiment of the present invention, because the braking assembly 400 can be arranged in the frame body 900, it will be easier or more convenient to use sound isolation means to reduce noise occurring during braking. Moreover, the braking assembly 400 will not be exposed to the outside environment as in the prior art and thus will be prevented from being rusted by dirt such as mud. The assembly's service life thus will not be affected.

Although some specific embodiments and/or examples of the present invention are described here, they are given for illustrative purposes only and cannot be deemed to constrain the scope of the present inventionin any way. Furthermore, it should be understood by a skilled person in the art that the embodiments and/or examples described here can be combined with each other. Without departing from the scope of the present invention as defined by the appended claims, various replacements, modifications and alternations can be carried out.

## Claims

1. A brake system for a motor vehicle, the brake system comprising:
a braking assembly (400);
a drive mechanism (500) operatively connected to the braking assembly (400); and
an electric motor assembly (200) operatively connected to the drive mechanism (500),
the braking assembly (400), the drive mechanism (500) and the electric motor assembly (200) being configured to be located outside a wheel rim (700) of a vehicle wheel of the motor vehicle and inside a frame body (900) of the motor vehicle, and the drive mechanism (500) being configured to be driven by the electric motor assembly (200) to selectively enable the braking assembly (400) to generate a braking force, by which an associated rotatable shaft of the motor vehicle can be stopped to rotate, while the motor vehicle is in motion during the running process of the motor vehicle, **characterized in that** the brake system further comprises
a hydraulic brake assembly (300) located outside the wheel rim (700) of the vehicle wheel of the motor vehicle and inside the frame body (900) of the motor vehicle, the hydraulic brake assembly (300) is in communication with a fluid space (501) in such a way that a brake fluid being selectively supplied into the fluid space (501), and the hydraulic brake assembly (300) is configured to, independently of the electric motor assembly (200), drive the drive mechanism (500) so as to enable a brake friction plate (420) to contact a brake disc (410) to generate a friction braking force, by which the rotatable shaft of the motor vehicle can be stopped to rotate while the vehicle is in motion during the running process of the motor vehicle.

2. The brake system according to claim 1, the braking assembly (400) being configured to include the brake disc (410) fixedly installed to the rotatable shaft and the brake friction plate (420) installed non-rotatably relative to the rotatable shaft.

3. The brake system according to claim 2, the drive mechanism (500) being configured to act on the brake friction plate (420).

4. The brake system according to claim 1, the electric motor assembly (200) comprising an electric motor (210) and a speed reducer (220) connected to an output shaft of the electric motor (210), and the speed reducer (220) being also configured to be connected to the drive mechanism (500).

5. The brake system according to claim 1, the drive mechanism (500) being configured to be driven by the electric motor assembly (200) such that the friction braking force for stopping the rotation of the rotatable shaft can be selectively generated by the brake friction plate (420).

6. The brake system according to claim 4, the drive mechanism (500) comprising a cylinder body (510) and a piston assembly (520) installed in the cylinder body (510), the piston assembly being axially movable in the cylinder body and configured to include a first part (521) configured to contact the brake friction plate (420) and a second part (530) opposite to the first part, and the speed reducer (220) being configured to be operatively connected to the second part (530).

7. The brake system according to claim 6, the fluid space (501) being formed between the second part (530) of the piston assembly (520) and an inner wall of the cylinder body (510) to receive the brake fluid.

8. The brake system according to claim 1 further comprises a brake pedal (610) connected to the electric motor assembly (200) and operatively connected to a brake master cylinder of the hydraulic brake assembly (300).

9. The brake system according to claim 1 further comprises a normally open solenoid valve (820) provided in a hydraulic circuit configured to connect the hydraulic brake assembly (300) with the fluid space (510), and the normally open solenoid valve (820) is configured to have an OFF mode, in which the hydraulic circuit is disabled when the electric motor assembly (200) functions normally, and an ON mode, in which the hydraulic circuit is enabled only when the electric motor assembly (200) functions abnormally.

10. The brake system according to claims 4 and 6, the second part (530) of the piston assembly (520) being formed with a cylinder-shaped inner wall on which a plunger piston (550) is axially slidably received in such a way that sliding of the piston assembly (520) in the cylinder body (510) is independent of sliding of the plunger piston (550), the plunger piston (550) comprises a central threaded hole in threaded engagement with a threaded shaft (540) rotatably installed through the cylinder body (510), and an end of the threaded shaft (540) outside the cylinder body (510) is connected to the speed reducer (220) in such a way that the threaded shaft is configured to be driven by the speed reducer (220) to rotate.

11. The brake system according to claim 10, the piston assembly (520) being provided with an abutting feature (522) capable of contacting the plunger piston (550), and the abutting feature being configured to be driven by the plunger piston (550) such that the piston assembly (520) can be axially moved in the cylinder body (510).

12. The brake system according to claim 1, the rotatable shaft being a driving shaft for driving the vehicle wheel to rotate; or alternatively the rotatable shaft is a driven shaft rotating with the vehicle wheel.

13. The brake system according to claim 1, each vehicle wheel of the motor vehicle being equipped with the brake system; or alternatively only forward vehicle wheels or rear vehicle wheels of the motor vehicle are equipped with the brake system.

14. A motor vehicle comprises
a brake system according to any one of the claims 1-13,
an electric motor assembly (200) comprising an electric motor (210) and a speed reducer (220) connected to an output shaft of the electric motor (210), and the speed reducer (220) being also configured to be connected to a drive mechanism (500),
the drive mechanism (500) comprising a cylinder body (510) and a piston assembly (520) installed in the cylinder body (510), the piston assembly being axially movable in the cylinder body and configured to include a first part (521) configured to contact a brake friction plate (420) and a second part (530) opposite to the first part, and the speed reducer (220) being configured to be operatively connected to the second part (530),
a fluid space (501) being formed between the second part (530) of the piston assembly (520) and an inner wall of the cylinder body (510) to receive a brake fluid.

15. The motor vehicle according to claim 14, being an electric vehicle.

16. A method for operating a motor vehicle in motion including a brake pedal (610), a brake system according to any one of claims 1 to 13, a rotatable shaft connecting to a wheel of the motor vehicle, comprising:
pressing the brake pedal (610) of the motor vehicle to activate the brake system, said brake system comprising a braking assembly (400); a drive mechanism (500) operatively connected to the braking assembly (400); and an electric motor assembly (200) operatively connected to the drive mechanism (500), wherein the braking assembly (400), the drive mechanism (500) and the electric motor assembly (200) are configured to be located outside a wheel rim of a vehicle wheel of the motor vehicle and inside a frame body (900) of the motor vehicle;
driving the braking assembly (400) only by the electric motor assembly (200) to generate a braking force if the electric motor assembly (200) functions normally, or by the hydraulic brake assembly (300), if the electric motor assembly (200) functions abnormally; and
having the braking force act on the rotatable shaft to stop the rotatable shaft from rotating.

17. The method according to claim 16, wherein if the electric motor assembly (200) functions abnormally, driving the braking assembly (400) of the brake system by pressing the brake pedal (610) to actuate a hydraulic brake assembly (300) of the brake system to generate the braking force to stop the rotatable shaft from rotating.

## Patentansprüche

1. Bremssystem für ein Kraftfahrzeug, wobei das Bremssystem Folgendes umfasst:
eine Bremsanordnung (400);
einen Antriebsmechanismus (500), der mit der Bremsanordnung (400) funktionsmäßig verbunden ist; und
eine Elektromotoranordnung (200), die mit dem Antriebsmechanismus (500) funktionsmäßig verbunden ist,
wobei die Bremsanordnung (400), der Antriebsmechanismus (500) und die Elektromotoranordnung (200) derart eingerichtet sind, dass sie außerhalb eines Radreifens (700) eines Fahrzeugrads des Kraftfahrzeugs und innerhalb eines Rahmenkörpers (900) des Kraftfahrzeugs angeordnet sind, und wobei der Antriebsmechanismus (500) dazu eingerichtet ist, durch die Elektromotoranordnung (200) angetrieben zu werden, um selektiv die Bremsanordnung (400) zu aktivieren, um eine Bremskraft zu erzeugen, durch die eine zugehörige drehbare Welle des Kraftfahrzeugs während des Fahrbetriebs des Kraftfahrzeugs im Bewegungszustand zum Stillstand gebracht werden kann, **dadurch gekennzeichnet, dass** das Bremssystem ferner eine hydraulische Bremsanordnung (300) umfasst, die außerhalb des Radreifens (700) des Fahrzeugrads des Kraftfahrzeugs und innerhalb des Rahmenkörpers (900) des Kraftfahrzeugs angeordnet ist, wobei die hydraulische Bremsanordnung (300) mit einem Fluidraum (501) in Kommunikation steht, so dass Bremsflüssigkeit selektiv in den Fluidraum (501) eingespeist werden kann, und wobei die hydraulische Bremsanordnung (300) unabhängig von der Elektromotoranordnung (200) dazu eingerichtet ist, den Antriebsmechanismus (500) anzutreiben, um eine Bremsreibplatte (420) mit einer Bremsscheibe (410) in Kontakt zu bringen, um eine Reibbremskraft zu erzeugen, durch die die drehbare Welle des Kraftfahrzeugs während des Fahrbetriebs des Kraftfahrzeugs im Bewegungszustand zum Stillstand gebracht werden kann.

2. Bremssystem nach Anspruch 1, wobei die Bremsanordnung (400) so eingerichtet ist, dass sie die Bremsscheibe (410), die fest an der drehbaren Welle installiert ist, und die Bremsreibplatte (420), die relativ zur drehbaren Welle nicht drehbar installiert ist, umfasst.

3. Bremssystem nach Anspruch 2, wobei der Antriebsmechanismus (500) eingerichtet ist, auf die Bremsreibplatte (420) einzuwirken.

4. Bremssystem nach Anspruch 1, wobei die Elektromotoranordnung (200) einen Elektromotor (210) und ein mit einer Abtriebswelle des Elektromotors (210) verbundenes Untersetzungsgetriebe (220) umfasst, und wobei das Untersetzungsgetriebe (220) ferner eingerichtet ist, mit dem Antriebsmechanismus (500) verbunden zu werden.

5. Bremssystem nach Anspruch 1, wobei der Antriebsmechanismus (500) eingerichtet ist, durch die Elektromotoranordnung (200) angetrieben zu werden, sodass die Reibbremskraft zum Stoppen der Drehung der drehbaren Welle selektiv durch die Bremsreibplatte (420) erzeugt werden kann.

6. Bremssystem nach Anspruch 4, wobei der Antriebsmechanismus (500) einen Zylinderkörper (510) und eine im Zylinderkörper (510) installierte Kolbenanordnung (520) umfasst, wobei die Kolbenanordnung axial im Zylinderkörper beweglich ist und eingerichtet ist, einen ersten Teil (521), der zum Kontaktieren der Bremsreibplatte (420) eingerichtet ist, und einen zweiten Teil (530), der dem ersten Teil gegenüberliegt, einzuschließen, und wobei das Untersetzungsgetriebe (220) eingerichtet ist, funktionsmäßig mit dem zweiten Teil (530) verbunden zu werden.

7. Bremssystem nach Anspruch 6, wobei der Fluidraum (501) zwischen dem zweiten Teil (530) der Kolbenanordnung (520) und einer Innenwand des Zylinderkörpers (510) ausgebildet ist, um Bremsflüssigkeit aufzunehmen.

8. Bremssystem nach Anspruch 1, ferner umfassend ein Bremspedal (610), das mit der Elektromotoranordnung (200) verbunden und funktionsmäßig mit einem Hauptbremszylinder der hydraulischen Bremsanordnung (300) verbunden ist.

9. Bremssystem nach Anspruch 1, ferner umfassend ein normalerweise offenes Magnetventil (820), das in einem Hydraulikkreis vorgesehen ist, der eingerichtet ist, die hydraulische Bremsanordnung (300) mit dem Fluidraum (510) zu verbinden, wobei das normalerweise offene Magnetventil (820) eingerichtet ist, einen AUS-Modus aufzuweisen, in dem der Hydraulikkreis deaktiviert ist, wenn die Elektromotoranordnung (200) normal funktioniert, und einen EIN-Modus, in dem der Hydraulikkreis nur dann aktiviert ist, wenn die Elektromotoranordnung (200) nicht normal funktioniert.

10. Bremssystem nach den Ansprüchen 4 und 6, wobei der zweite Teil (530) der Kolbenanordnung (520) mit einer zylinderförmigen Innenwand ausgebildet ist, an der ein Plungerkolben (550) axial verschiebbar aufgenommen ist, sodass die Verschiebung der Kolbenanordnung (520) im Zylinderkörper (510) unabhängig von der Verschiebung des Plungerkolbens (550) ist, wobei der Plungerkolben (550) ein zentrales Gewindeloch aufweist, das mit einer Gewindewelle (540), die drehbar durch den Zylinderkörper (510) installiert ist, in Gewindeeingriff steht, und wobei ein Ende der Gewindewelle (540) außerhalb des Zylinderkörpers (510) mit dem Untersetzungsgetriebe (220) verbunden ist, sodass die Gewindewelle durch das Untersetzungsgetriebe (220) zum Drehen angetrieben werden kann.

11. Bremssystem nach Anspruch 10, wobei die Kolbenanordnung (520) mit einem Anlageelement (522) versehen ist, das dazu fähig ist, den Plungerkolben (550) zu kontaktieren, wobei das Anlageelement eingerichtet ist, durch den Plungerkolben (550) angetrieben zu werden, sodass die Kolbenanordnung (520) axial im Zylinderkörper (510) bewegt werden kann.

12. Bremssystem nach Anspruch 1, wobei die drehbare Welle eine Antriebswelle ist, die das Fahrzeugrad zum Drehen antreibt; oder alternativ ist die drehbare Welle eine Abtriebswelle, die sich mit dem Fahrzeugrad dreht.

13. Bremssystem nach Anspruch 1, wobei jedes Fahrzeugrad des Kraftfahrzeugs mit dem Bremssystem ausgestattet ist; oder alternativ nur vordere Fahrzeugräder oder hintere Fahrzeugräder des Kraftfahrzeugs mit dem Bremssystem ausgestattet sind.

14. Kraftfahrzeug, umfassend
ein Bremssystem nach einem der Ansprüche 1 bis 13,
eine Elektromotoranordnung (200), umfassend einen Elektromotor (210) und ein mit einer Abtriebswelle des Elektromotors (210) verbundenes Untersetzungsgetriebe (220), wobei das Untersetzungsgetriebe (220) ferner eingerichtet ist, mit einem Antriebsmechanismus (500) verbunden zu werden,
wobei der Antriebsmechanismus (500) einen Zylinderkörper (510) und eine im Zylinderkörper (510) installierte Kolbenanordnung (520) umfasst, wobei die Kolbenanordnung axial im Zylinderkörper beweglich ist und eingerichtet ist, einen ersten Teil (521), der eingerichtet ist, eine Bremsreibplatte (420) zu kontaktieren, und einen zweiten Teil (530), der dem ersten Teil gegenüberliegt, einzuschließen, und wobei das Untersetzungsgetriebe (220) eingerichtet ist, funktionsmäßig mit dem zweiten Teil (530) verbunden zu werden,
wobei ein Fluidraum (501) zwischen dem zweiten Teil (530) der Kolbenanordnung (520) und einer Innenwand des Zylinderkörpers (510) ausgebildet ist, um Bremsflüssigkeit aufzunehmen.

15. Kraftfahrzeug nach Anspruch 14, das ein Elektrofahrzeug ist.

16. Verfahren zum Betreiben eines sich in Bewegung befindlichen Kraftfahrzeugs, umfassend ein Bremspedal (610), ein Bremssystem nach einem der Ansprüche 1 bis 13 und eine drehbare Welle, die mit einem Rad des Kraftfahrzeugs verbunden ist, wobei das Verfahren Folgendes umfasst:
Betätigen des Bremspedals (610) des Kraftfahrzeugs zur Aktivierung des Bremssystems, wobei das Bremssystem eine Bremsanordnung (400), einen Antriebsmechanismus (500), der funktionsmäßig mit der Bremsanordnung (400) verbunden ist, und eine Elektromotoranordnung (200), die funktionsmäßig mit dem Antriebsmechanismus (500) verbunden ist, umfasst, wobei die Bremsanordnung (400), der Antriebsmechanismus (500) und die Elektromotoranordnung (200) derart eingerichtet sind, außerhalb eines Radreifens eines Fahrzeugrads des Kraftfahrzeugs und innerhalb eines Rahmenkörpers (900) des Kraftfahrzeugs angeordnet zu werden;
Antrieb der Bremsanordnung (400) ausschließlich durch die Elektromotoranordnung (200) zur Erzeugung einer Bremskraft, sofern die Elektromotoranordnung (200) normal funktioniert, oder durch die hydraulische Bremsanordnung (300), sofern die Elektromotoranordnung (200) nicht normal funktioniert; und
Einwirkenlassen der Bremskraft auf die drehbare Welle, um die Drehung der drehbaren Welle zu stoppen.

17. Verfahren nach Anspruch 16, wobei, sofern die Elektromotoranordnung (200) nicht normal funktioniert, die Bremsanordnung (400) des Bremssystems durch Betätigen des Bremspedals (610) angetrieben wird, um eine hydraulische Bremsanordnung (300) des Bremssystems zu betätigen und die Bremskraft zu erzeugen, durch welche die Drehung der drehbaren Welle gestoppt wird.

## Revendications

1. Système de freinage pour un véhicule automobile, le système de freinage comprenant :
un ensemble de freinage (400) ;
un mécanisme d'entraînement (500) relié de manière fonctionnelle à l'ensemble de freinage (400) ; et
un ensemble moteur électrique (200) relié de manière fonctionnelle au mécanisme d'entraînement (500),
l'ensemble de freinage (400), le mécanisme d'entraînement (500) et l'ensemble moteur électrique (200) étant conçus pour être situés à l'extérieur d'une jante de roue (700) d'une roue de véhicule du véhicule automobile et à l'intérieur d'un corps de châssis (900) du véhicule automobile, et le mécanisme d'entraînement (500) étant conçu pour être entraîné par l'ensemble moteur électrique (200) afin de permettre sélectivement à l'ensemble de freinage (400) de générer une force de freinage par laquelle la rotation d'un arbre rotatif associé du véhicule automobile peut être arrêtée, alors que le véhicule automobile est en mouvement pendant le processus de fonctionnement du véhicule automobile, **caractérisé en ce que** le système de freinage comprend en outre
un ensemble frein hydraulique (300) situé à l'extérieur de la jante de roue (700) de la roue de véhicule du véhicule automobile et à l'intérieur du corps de châssis (900) du véhicule automobile, l'ensemble frein hydraulique (300) est en communication avec un espace de fluide (501) de manière à ce qu'un fluide de freinage soit sélectivement fourni dans l'espace de fluide (501), et l'ensemble frein hydraulique (300) est conçu pour, indépendamment de l'ensemble moteur électrique (200), entraîner le mécanisme d'entraînement (500) de manière à permettre à une plaque de friction de frein (420) d'entrer en contact avec un disque de frein (410) pour générer une force de freinage par friction, ce qui permet d'arrêter la rotation de l'arbre rotatif du véhicule automobile alors que le véhicule est en mouvement pendant le processus de fonctionnement du véhicule automobile.

2. Système de freinage selon la revendication 1, l'ensemble de freinage (400) étant conçu pour inclure le disque de frein (410) installé de manière fixe sur l'arbre rotatif et la plaque de friction de frein (420) installée de manière non rotative par rapport à l'arbre rotatif.

3. Système de freinage selon la revendication 2, le mécanisme d'entraînement (500) étant conçu pour agir sur la plaque de friction de frein (420).

4. Système de freinage selon la revendication 1, l'ensemble moteur électrique (200) comprenant un moteur électrique (210) et un réducteur de vitesse (220) relié à un arbre de sortie du moteur électrique (210), et le réducteur de vitesse (220) étant également conçu pour être relié au mécanisme d'entraînement (500).

5. Système de freinage selon la revendication 1, le mécanisme d'entraînement (500) étant conçu pour être entraîné par l'ensemble moteur électrique (200) de sorte que la force de freinage par friction pour arrêter la rotation de l'arbre rotatif peut être sélectivement générée par la plaque de friction de frein (420).

6. Système de freinage selon la revendication 4, le mécanisme d'entraînement (500) comprenant un corps de cylindre (510) et un ensemble piston (520) installé dans le corps de cylindre (510), l'ensemble piston étant mobile axialement dans le corps de cylindre et conçu pour inclure une première partie (521) conçue pour entrer en contact avec la plaque de friction de frein (420) et une seconde partie (530) opposée à la première partie, et le réducteur de vitesse (220) étant conçu pour être relié de manière fonctionnelle à la seconde partie (530).

7. Système de freinage selon la revendication 6, l'espace de fluide (501) étant formé entre la seconde partie (530) de l'ensemble piston (520) et une paroi intérieure du corps de cylindre (510) pour recevoir le fluide de freinage.

8. Système de freinage selon la revendication 1 comprenant en outre une pédale de frein (610) reliée à l'ensemble moteur électrique (200) et reliée de manière fonctionnelle à un maître-cylindre de frein de l'ensemble frein hydraulique (300).

9. Système de freinage selon la revendication 1, comprenant en outre une électrovanne normalement ouverte (820) prevue dans un circuit hydraulique conçu pour relier l'ensemble frein hydraulique (300) avec l'espace de fluide (510), et l'électrovanne normalement ouverte (820) est conçue pour avoir un mode ARRÊT, dans lequel le circuit hydraulique est désactivé lorsque l'ensemble moteur électrique (200) fonctionne normalement, et un mode MARCHE, dans lequel le circuit hydraulique est activé uniquement lorsque l'ensemble moteur électrique (200) fonctionne de manière anormale.

10. Système de freinage selon les revendications 4 et 6, la seconde partie (530) de l'ensemble piston (520) étant dotée d'une paroi intérieure en forme de cylindre sur laquelle un piston plongeur (550) est reçu axialement de manière coulissante de telle sorte que le glissement de l'ensemble piston (520) dans le corps de cylindre (510) est indépendant du glissement du piston plongeur (550), le piston plongeur (550) comprend un trou fileté central en prise par vissage avec un arbre fileté (540) installé de manière rotative à travers le corps de cylindre (510), et une extrémité de l'arbre fileté (540) à l'extérieur du corps du cylindre (510) est reliée au réducteur de vitesse (220) de telle manière que l'arbre fileté est conçu pour être entraîné en rotation par le réducteur de vitesse (220).

11. Système de freinage selon la revendication 10, l'ensemble piston (520) étant pourvu d'un élément de butée (522) capable d'entrer en contact avec le piston plongeur (550), et l'élément de butée étant conçu pour être entraîné par le piston plongeur (550) de sorte que l'ensemble piston (520) puisse être déplacé axialement dans le corps de cylindre (510).

12. Système de freinage selon la revendication 1, l'arbre rotatif étant un arbre d'entraînement pour entraîner la roue de véhicule en rotation ; ou bien l'arbre rotatif est un arbre entraîné qui tourne avec la roue de véhicule.

13. Système de freinage selon la revendication 1, chaque roue de véhicule du véhicule automobile étant équipée du système de freinage ; ou bien seules des roues avant de véhicule ou des roues arrière de véhicule du véhicule automobile sont équipées du système de freinage.

14. Véhicule à moteur comprenant
un système de freinage selon l'une quelconque des revendications 1 à 13,
un ensemble moteur électrique (200) comprenant un moteur électrique (210) et un réducteur de vitesse (220) relié à un arbre de sortie du moteur électrique (210), le réducteur de vitesse (220) étant également conçu pour être relié à un mécanisme d'entraînement (500),
le mécanisme d'entraînement (500) comprenant un corps de cylindre (510) et un ensemble piston (520) installé dans le corps de cylindre (510), l'ensemble piston étant mobile axialement dans le corps de cylindre et conçu pour inclure une première partie (521) conçue pour entrer en contact avec une plaque de friction de frein (420) et une seconde partie (530) opposée à la première partie, et le réducteur de vitesse (220) étant conçu pour être relié de manière fonctionnelle à la seconde partie (530),
un espace de fluide (501) étant formé entre la seconde partie (530) de l'ensemble piston (520) et une paroi intérieure du corps de cylindre (510) pour recevoir un fluide de freinage.

15. Véhicule à moteur selon la revendication 14, qui est un véhicule électrique.

16. Procédé de fonctionnement d'un véhicule automobile en mouvement comportant une pédale de frein (610), un système de freinage selon l'une quelconque des revendications 1 à 13, un arbre rotatif relié à une roue du véhicule automobile, comprenant :
le fait d'appuyer sur la pédale de frein (610) du véhicule automobile pour activer le système de freinage, ledit système de freinage comprenant un ensemble de freinage (400) ; un mécanisme d'entraînement (500) relié de manière fonctionnelle à l'ensemble de freinage (400) ; et un ensemble moteur électrique (200) relié de manière fonctionnelle au mécanisme d'entraînement (500), dans lequel l'ensemble de freinage (400), le mécanisme d'entraînement (500) et l'ensemble moteur électrique (200) sont conçus pour être situés à l'extérieur d'une jante de roue d'une roue du véhicule automobile et à l'intérieur d'un corps de châssis (900) du véhicule automobile ;
l'entraînement de l'ensemble de freinage (400) uniquement par l'ensemble moteur électrique (200) pour générer une force de freinage si l'ensemble moteur électrique (200) fonctionne normalement, ou par l'ensemble frein hydraulique (300), si l'ensemble moteur électrique (200) fonctionne anormalement ; et
l'application de la force de freinage sur l'arbre rotatif pour l'empêcher l'arbre rotatif de tourner.

17. Procédé selon la revendication 16, dans lequel, si l'ensemble moteur électrique (200) fonctionne anormalement, l'entraînement de l'ensemble de freinage (400) du système de freinage en appuyant sur la pédale de frein (610) pour actionner un ensemble frein hydraulique (300) du système de freinage pour générer la force de freinage afin d'arrêter la rotation de l'arbre rotatif.
